# FASCICULE DE BREVET EUROPEEN

(11) **EP 3 325 283 B1**
(45) Date de publication et mention de la délivrance du brevet: **04.09.2019**
(21) Numéro de dépôt: 16741700.5
(22) Date de dépôt: 19.07.2016
(51) Int. Cl.: B60C 9/22, B60C 9/00, B60C 9/18

(54) **PNEUMATIQUE COMPRENANT DES ÉLÉMENTS DE RENFORT SOUS FORME DE BANDELETTES MULTICOUCHES**
LUFTREIFEN MIT VERSTÄRKUNGSELEMENTEN IN FORM VON MEHRSCHICHTIGEN BÄNDERN
PNEUMATIC TYRE COMPRISING REINFORCING ELEMENTS IN THE FORM OF MULTI-LAYER TAPES

(30) Priorité: 21.07.2015 FR 1501545
(43) Date de publication de la demande: 30.05.2018
(73) Titulaire: Compagnie Générale des Etablissements Michelin, 63000 Clermont-Ferrand (FR)
(72) Inventeur: BOSQUET, Augustin, 63040 Clermont-Ferrand Cedex 9 (FR); PINEAU, Jacky, 63040 Clermont-Ferrand Cedex 9 (FR); GUY, Thomas, 63040 Clermont-Ferrand Cedex 9 (FR); LE CLERC, Christophe, 63040 Clermont-Ferrand Cedex 9 (FR); THUILLIEZ, Anne-Lise, 63040 Clermont-Ferrand Cedex 9 (FR)
(74) Mandataire: Lasson, Cédric Yves
(86) Numéro de dépôt international: PCT/IB2016/054277
(87) Numéro de publication internationale: WO 2017/013575

(56) Documents cités:
- WO-A1-2010/115861
- WO-A1-2012/104281
- FR-A1- 2 964 906
- JP-A- 2002 187 408

## Description

### DOMAINE TECHNIQUE DE L'INVENTION

La présente invention concerne des éléments de renfort de pneumatique. Elle concerne plus particulièrement des éléments architecturaux de sommet de pneumatique.

### ETAT DE LA TECHNIQUE ANTERIEURE

Les pneumatiques à carcasse radiale, couramment appelés « pneumatiques radiaux », se sont progressivement imposés sur la plupart des marchés et en particulier sur le marché des pneumatiques pour véhicules de tourisme. Ce succès est dû en particulier aux qualités d'endurance, de confort, de légèreté et de faible résistance au roulement de la technologie radiale.

Le pneumatique radial est essentiellement constitué de flancs souples et d'un sommet plus rigide, les flancs s'étendant radialement des bourrelets jusqu'aux épaules, les épaules délimitant le sommet, le sommet supportant la bande de roulement du pneumatique. Chacune de ces parties du pneumatique ayant des fonctions propres, leur armature est également spécifique. Une caractéristique de la technologie radiale est qu'elle permet d'adapter précisément l'armature de chacune de ces parties de manière relativement indépendante.

L'armature de sommet d'un pneumatique radial de tourisme (couramment appelé « pneumatique tourisme ») comprend de manière connue les éléments suivants :
- une armature de carcasse radiale formée de renforts (généralement textiles) reliant les deux bourrelets du pneumatique ;
- deux couches (ou nappes) croisées de triangulation de sommet consistant essentiellement en des renforts (généralement métalliques) formant chacune un angle d'environ 30 degrés avec la direction circonférentielle du pneumatique ;
- une ceinture de sommet consistant essentiellement en des renforts pratiquement parallèles à la direction circonférentielle du pneumatique, appelés souvent renforts à 0 degré même s'ils forment en général un angle non nul avec la direction circonférentielle, par exemple un angle compris entre 0 et 10 degrés.

En schématisant, la carcasse a pour fonction première de contenir la pression interne du pneumatique, les nappes croisées ont pour fonction première de donner au pneumatique sa rigidité de dérive et la ceinture de sommet a pour fonction première de résister à la centrifugation de sommet à haute vitesse. En outre, la coopération de tous ces éléments d'armature crée ce que l'on appelle la « triangulation du sommet ». C'est cette triangulation qui procure au pneumatique sa capacité à maintenir une forme relativement cylindrique face aux diverses sollicitations.

Chacun de ces éléments de l'armature sommet est généralement associé par calandrage à des mélanges élastomères. L'empilement de ces éléments est alors rendu solidaire au cours de la vulcanisation du pneumatique.

Après plusieurs décennies de recherche, de progrès et d'optimisation de l'architecture des pneumatiques radiaux, c'est la combinaison de tous ces éléments d'armature (carcasse, couches croisées, ceintures) qui permet au pneumatique radial d'atteindre les indéniables performances de confort, de longévité et de coût de revient qui font son succès. Tout au long de ce développement, on a cherché à améliorer les performances des pneumatiques, par exemple du point de vue de leur masse et de leur résistance au roulement. C'est ainsi que le sommet du pneumatique radial a vu progressivement son épaisseur diminuer par l'adoption de renforts de plus en plus performants et de calandrages de plus en plus minces de manière à fabriquer les pneumatiques les plus légers possibles.

Le document WO2010115860 décrit un pneumatique pour véhicule de tourisme dans lequel l'armature de sommet est constituée de trois éléments distincts et séparés : une armature de carcasse radiale composée de renforts reliant les deux talons du pneumatique, une ceinture de sommet constituée essentiellement d'éléments de renfort parallèles à la direction circonférentielle du pneumatique, et une couche de sommet de triangulation constituée essentiellement d'éléments de renfort formant un angle par rapport à la circonférence du pneumatique. Une telle architecture présente de nombreux avantages du point de vue des performances du pneumatique, mais implique un procédé de fabrication complexe, avec de nombreuses étapes. Enfin, le nombre de sous-couches présentes limite les gains potentiels en terme de masse.

D'autres types d'agencements des renforts de sommet sont également connus. Par exemple, le document US5837077 décrit un pneumatique comportant une ceinture. La ceinture de pneumatique est formée en enroulant plusieurs fois une bande continue en spirale, avec la partie latérale de la section tubulaire aplatie, à l'extérieur de la couche de carcasse, dans la direction circonférentielle du pneumatique et sur une largeur correspondante à la largeur de la couche de la ceinture. Cette bande continue est constituée d'une pluralité de fils de renforts arrangés selon une configuration tubulaire et recouverte de caoutchouc afin de former une structure à deux couches superposées, soit une couche supérieure et une couche inférieure, et comporte également un noyau inséré entre ces deux couches, les fils de renforts des deux couches se croisant mutuellement. Cette bande continue peut être formée en disposant une pluralité de fils de renfort (par exemple des fils ou des câbles d'acier), de préférence de 5 à 100 fils, dans une forme tubulaire, puis en tordant l'ensemble des fils selon un angle prédéterminé par rapport à la direction longitudinale, puis en recouvrant l'ensemble tubulaire de caoutchouc, puis en insérant le noyau dans l'élément tubulaire, et enfin en aplatissant l'élément tubulaire dans sa direction longitudinale.

Le document décrit une bandelette circonférentielle comprenant des fils de renfort enrobés de matériaux élastomères. La bandelette présente initialement un profil ovalisé, requérant une étape de traitement mécanique afin d'aplanir le profil. Cette mise en oeuvre est particulièrement complexe et coûteuse à réaliser.

Le document EP0101400 décrit un pneumatique radial ayant une pluralité de bandes annulaires semi-rigides disposées dans une portion de couronne du pneumatique. Les bandes s'étendent sensiblement à travers la partie de la bande de roulement du pneumatique. Selon un mode de réalisation particulier, la bande de roulement comprend une structure de renforcement de bande centrale et deux bandes de côtés. Les bandes comportent chacune des renforts fibreux incorporés dans une matrice de résine époxy, formant une structure en arceaux semi-rigides. Les bandes sont relativement larges, indépendantes les unes des autres, et réalisées à partir de fibres englobées dans une matrice de résine époxy.

Un autre pneumatique connu est décrit dans le document JP-2002187408 A.

Pour pallier ces différents inconvénients, notamment la complexité de réalisation, l'invention prévoit différents moyens techniques.

### EXPOSE DE L'INVENTION

Tout d'abord, un premier objet de l'invention est de permettre de réduire la masse du sommet et donc des pneumatiques pour véhicules de tourisme, sans réduire leurs performances.

**Un** autre objet de l'invention consiste à prévoir un agencement de renforts sommet susceptible d'être mis en forme selon une vaste panoplie de variantes, permettant ainsi d'adapter les caractéristiques du sommet en fonction du type de pneumatique.

**Un** autre objectif de l'invention consiste à simplifier le processus de fabrication des pneumatiques, en particulier au niveau de la zone du sommet.

Pour se faire, l'invention prévoit un pneumatique comprenant une nappe carcasse reliant deux bourrelets par l'intermédiaire de deux flancs, ladite nappe carcasse étant surmontée radialement à l'extérieur par une zone de renfort de sommet, elle-même radialement à l'intérieur d'une bande de roulement, ladite zone de renfort de sommet comprenant une pluralité de bandelettes de renfort disposées sur au moins deux couches, une première couche radialement à l'intérieur et une seconde couche radialement à l'extérieur, lesdites bandelettes desdites première et seconde couches étant disposées de manière juxtaposées selon une direction sensiblement circonférentielle, lesdites bandelettes étant enrobées d'une composition élastomère, caractérisé en ce que le recouvrement moyen entre les bandelettes des deux couches est supérieur à 40%, et en ce que les bandelettes de renfort sont constituées d'un film thermoplastique présentant un module supérieur à 0,9 GPa et de préférence supérieur à 2 GPa dans la direction principale et dans la direction transverse.

Une telle architecture permet de simplifier la zone sommet du pneumatique, d'obtenir une zone de renfort plus compacte tout en procurant d'importantes réductions de poids. Le procédé de fabrication du pneumatique est simplifié par la suppression des traditionnelles nappes sommet de triangulation qui requièrent des étapes de découpe et de positionnement relativement fastidieuses. Enfin, cette architecture permet de réduire la résistance au roulement du fait de l'agencement simplifié, optimisé et aminci.

Selon un mode de réalisation avantageux, le rapport de forme longueur/largeur et largeur/épaisseur du film thermoplastique est supérieur ou égal à 5.

Selon un mode de réalisation avantageux, le film thermoplastique est composé de polyester bi-étiré ou mono-étiré stabilisé thermiquement ou de polyamide.

Selon un autre mode de réalisation avantageux, les bandelettes sont intégrées dans une matrice constituée d'un mélange élastomère, de préférence diénique.

Dans un exemple de réalisation, le mélange élastomère de la matrice présente un module à 10% d'allongement compris entre 3 et 20 MPa.

Dans un autre exemple de réalisation, le mélange élastomère de la matrice présente un module à 10% d'allongement supérieur à 20 MPa.

Selon encore un mode de réalisation avantageux, la matrice de mélange élastomère comprend des renforts filaires circonférentiels intégrés dans ladite matrice.

En variante, les bandelettes comprennent des renforts filaires circonférentiels intégrés dans le film thermoplastique constitutif de la bandelette.

Selon encore une autre variante de réalisation, les bandelettes sont de type composite, et comprennent un film thermoplastique et un alignement de fils de renfort agencé au voisinage du film thermoplastique, l'ensemble étant intégré dans une matrice de mélange élastomère, de préférence diénique.

**De** manière avantageuse, l'interface entre les bandelettes et le mélange élastomère de matrice prévoit un élément adhésif.

Les bandelettes sont disposées côte-à-côte pour constituer un alignement. Le pneumatique selon l'invention comprend avantageusement au moins deux alignements de bandelettes.

### DESCRIPTION DES FIGURES

Tous les détails de réalisation sont donnés dans la description qui suit, complétée par les figures 1 à 9 présentées uniquement à des fins d'exemples non limitatifs, et dans lesquelles:
- la figure 1 est une représentation schématique en perspective d'un pneumatique selon l'art antérieur ;
- la figure 2 est une vue en coupe d'un pneumatique selon l'invention ;
- la figure 3A est une représentation schématique d'un exemple de renfort sommet de pneumatique selon l'invention comportant des alignements de bandelettes;
- la figure 3B est une représentation schématique d'un autre exemple de renfort sommet de pneumatique selon l'invention comportant des alignements de bandelettes;
- la figure 4A est une représentation schématique d'un autre exemple de renfort sommet comportant un alignement de câbles textiles de renfort et de deux alignements de bandelettes thermoplastiques ;
- la figure 4B est une représentation schématique d'un autre exemple de renfort sommet selon l'invention, constitué d'un alignement de câbles textiles de renfort et de deux alignements de bandelettes thermoplastiques ;
- la figure 5 est une représentation schématique d'un exemple de renfort sommet comportant des alignements de bandelettes disposés de part et d'autre d'une rangée de câbles textiles de renfort ;
- la figure 6 est une représentation schématique d'un exemple de renfort sommet constitué d'alignements de câbles textiles de renfort et de bandelettes thermoplastiques, disposés en alternance ;
- la figure 7A est une représentation schématique d'un exemple de bandelette composite selon l'invention constituée de câbles textiles de renfort, de bandelettes thermoplastiques et d'une matrice diénique ;
- la figure 7B est une représentation schématique d'une variante de bandelette composite dans laquelle l'agencement des câbles textiles et des bandelettes thermoplastiques est inversé ;
- la figure 8 est une représentation schématique d'une bandelette composite à deux éléments dans laquelle les câbles textiles de renfort sont intégrés dans une bandelette thermoplastique ;
- la figure 9 est une représentation schématique d'un exemple de renfort de sommet de pneumatique dans lequel sont alignés des bandelettes composites.

### DESCRIPTION DETAILLEE DE L'INVENTION

### DEFINITIONS

Dans le présent document, par « recouvrement de bandelettes », ou chevauchement, on entend un agencement dont les bandelettes d'une couche radialement extérieure recouvrent ou chevauchent les bandelettes de la couche radialement intérieure, c'est-à-dire que la projection dans la direction radiale d'une bandelettes sur la bandelette de niveau inférieur est non nulle. Le pourcentage de recouvrement peut varier selon les modes de réalisation. Ce recouvrement forme un couplage entre les couches générant une cohésion de l'ensemble de la zone de renfort du sommet. Ce couplage permet en particulier une transmission d'efforts de cisaillement entre les couches.
Par « direction longitudinale » ou « direction circonférentielle », on entend une direction qui correspond à la périphérie du pneumatique et qui est définie par la direction de roulement du pneumatique.
Par « direction axiale », on entend une direction parallèle à l'axe de roulement du pneumatique.
Par « dureté Shore A », on entend la dureté des compositions après cuisson, appréciée conformément à la norme ASTM D 2240-86.
Par « pneumatique », on entend tous les types de bandages élastiques soumis à une pression interne ou non.
Par « bande de roulement » d'un pneumatique, on entend une quantité de mélange élastomère délimitée par des surfaces latérales et par deux surfaces principales dont l'une est destinée à entrer en contact avec une chaussée lorsque le pneumatique roule.
Par « flanc » d'un pneumatique, on entend une surface latérale du pneumatique disposée entre la bande de roulement du pneumatique et un bourrelet de ce pneumatique.
Par « bourrelet » d'un pneumatique, on entend une partie du pneumatique destinée à prendre assise sur une jante de roue.
Dans le présent document, par « carcasse », ou « nappe carcasse », on entend une structure de renfort pour pneumatique sous forme d'une couche constituée d'une matrice en matériau élastomère dans laquelle des filaments ou fils, généralement textiles, sont agencés selon un alignement sensiblement parallèle et longitudinal. La nappe carcasse est avantageusement fabriquée à plat, en grande longueur, puis découpée aux dimensions adéquates pour la fabrication d'un pneumatique pour lequel la nappe carcasse est adaptée.

**On** mesure en seconde élongation (i.e., après un cycle d'accommodation au taux d'extension prévu pour la mesure elle-même) les modules sécants nominaux (ou contrainte apparente, en MPa) à 10% d'allongement (notés MA 10) et à 100% d'allongement (notés MA 100) à 23°C ± 2°C, et dans les conditions normales d'hygrométrie.

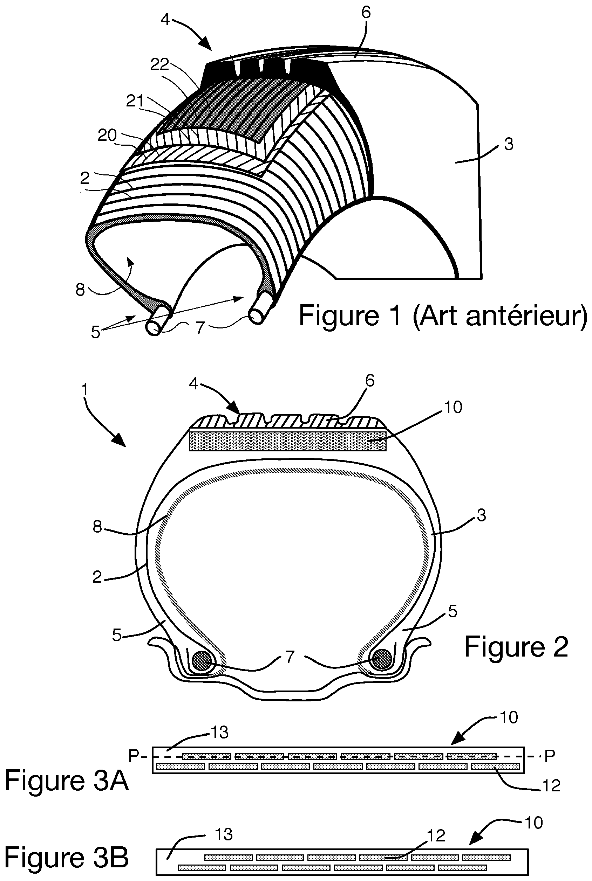

La figure 1 illustre une vue en perspective d'un pneumatique partiellement découpé couche par couche, pour véhicule de tourisme selon l'état de la technique. Une armature de carcasse 2 reliée aux bourrelets 5 autour de tringles 7 s'étend le long des flancs 3 et du sommet 4. L'armature de carcasse 2 est formée de renforts orientés radialement. Les renforts sont des câbles textiles (par exemple en nylon, rayonne, polyester). Au niveau du sommet du pneumatique, la carcasse est surmontée de deux couches croisées 20, 21 de triangulation, et d'une ceinture 22. Les deux couches croisées 20, 21 de triangulation de sommet comportent des renforts orientés selon un angle compris sensiblement entre 20 et 40 degrés de part et d'autre de la direction circonférentielle du pneumatique. Les renforts des couches croisés constituent de manière générale des câbles métalliques. Une couche 8 de mélange élastomère d'étanchéité recouvre la cavité interne du pneumatique. Une bande de roulement 6 surmonte l'ensemble. Cette architecture implique plusieurs couches de semi-finis, requérant un procédé de fabrication avec de nombreuses étapes intermédiaires. Les nombreuses couches rendent le pneumatique relativement lourd.

La figure 2 représente un pneumatique 1 selon l'invention, comprenant des flancs 3 surmontés d'un sommet 4 et une carcasse 2 s'étendant d'un bourrelet 5 à l'autre, en passant par les flancs 3 et le sommet 4. Au niveau du sommet 4, plus spécifiquement entre la carcasse 2 et la bande de roulement 6, le pneumatique prévoit une zone de renfort sommet 10 pourvue de bandelettes circonférentielles, c'est-à-dire orientées sensiblement à 0° par rapport à la direction circonférentielle. Divers modes de réalisation des bandelettes sont décrits ci-après, en relation avec les figures 3 à 9.

### MODES DE REALISATIONS DES BANDELETTES

Les figure 3A et 3B illustrent un premier mode de réalisation d'une zone sommet 10 selon l'invention. Selon ce mode de réalisation, des bandelettes 12 constituées d'un film thermoplastique sont disposées côte à côte à angle sensiblement proche de 0 degré, et plus largement selon un angle inférieur à sensiblement 12 degrés de la direction circonférentielle. L'ensemble est englobé dans une matrice 13 constituée d'un mélange élastomère de préférence diénique. Le positionnement des bandelettes en quinconce est réalisé par exemple par un premier trancanage débutant à un azimut donné, et un second trancanage débutant à 180 degrés. En variante, le positionnement des bandelettes est réalisé par un premier trancanage dans une direction axiale donnée, suivi d'un second trancanage dans la direction axiale opposée.

Dans l'exemple de réalisation de la figure 3A, avec une disposition symétrique, deux rangées de bandelettes sont agencées avec un décalage latéral entre les positions des bandelettes des deux rangées d'environ un demi pas de la bandelette. Le plan principal P-P de chaque rangée est sensiblement axial. Un tel agencement a pour effet de recouvrir les ponts de mélange élastomère de la première rangée, par les bandelettes constituant la seconde rangée. Les ponts de mélange élastomère entre les bandelettes de la première rangée sont ainsi positionnés sensiblement au milieu des largeurs respectives des bandelettes de la couche adjacente. Dans cet exemple, la couche radialement extérieure comporte un enroulement de moins de façon à compenser l'effet du décalage latéral. Le recouvrement moyen entre les bandelettes des deux rangées est d'au moins 20% et de préférence supérieur à 40%.

L'exemple de réalisation de la figure 3B comporte deux rangées de même largeur, dont l'une est décalée par rapport à l'autre, afin de produire un pneumatique dont les caractéristiques sont asymétriques.

En variante, les points de départ et d'arrêt des couches peuvent éventuellement être unifiés afin d'assurer une certaine uniformité.

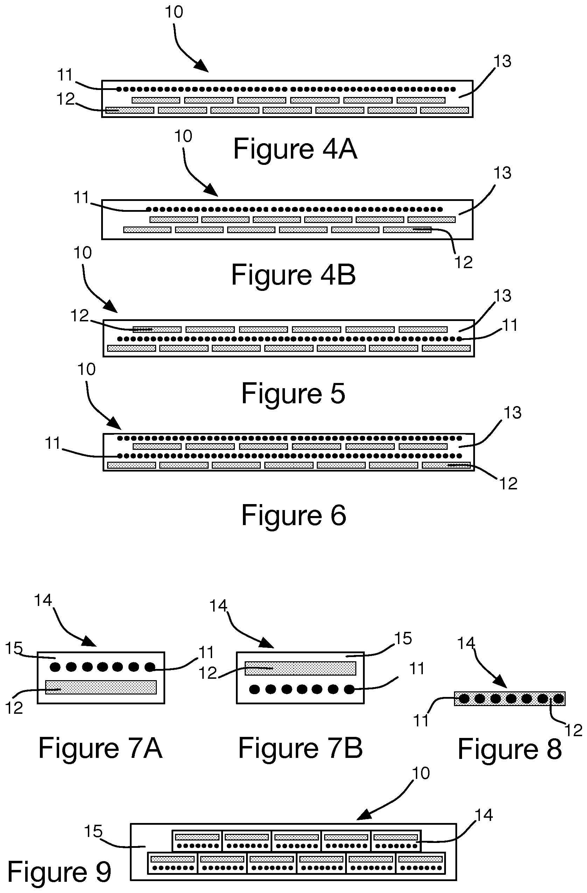

Les figures 4A et 4B illustrent des variantes de réalisation des figures 3A et 3B comportant, en plus des rangées de bandelettes préalablement décrites, un alignement de fils 11 de renfort prévu en position radialement extérieure. Les fils 11 sont préférentiellement des fils textiles. En plus d'apporter une certaine rigidité, les fils circonférentiels permettent de protéger les couches radialement internes.

**La** figure 5 illustre une variante de l'exemple de la figure 4A dans laquelle l'alignement de fils 11 est prévu entre les deux rangées de bandelettes 12.

La figure 6 illustre une autre variante de l'exemple de la figure 4A dans laquelle l'alignement de fils 11 en position radialement extérieure est complété par un second alignement de fils 11 prévu entre les deux rangées de bandelettes 12, de façon à rigidifier d'avantage la zone du sommet.

### BANDELETTES COMPOSITES

Un second mode de réalisation des bandelettes est présenté en relation avec les figures 7A, 7B et 8. La figure 7A illustre un exemple de réalisation dans lequel un film thermoplastique 12 tel que préalablement décrit est surmonté d'une rangée 11 de fils de renfort, préférentiellement textiles. L'ensemble est englobé dans une matrice 15 constituée d'un mélange élastomère de préférence diénique et forme une bandelette composite 14. La figure 7B présente une variante de bandelette composite 14 avec une géométrie inversée, la rangée de fils étant agencée radialement intérieurement par rapport au film thermoplastique.

La figure 8 illustre un troisième exemple de bandelette composite dans lequel une rangée de fils 11 de renfort est intégrée directement dans un film thermoplastique. Cette variante présente les avantages supplémentaires d'une plus grande légèreté et d'une très grande compacité.

La figure 9 illustre une disposition en quinquonce des bandelettes composites 14. Dans cet exemple, deux rangées de bandelettes composites sont prévues, la rangée radialement extérieure étant la plus étroite.

Les bandelettes composites permettent de simplifier les étapes de fabrication de la zone sommet du pneumatique. En modifiant uniquement le type de bandelette, sans changer les autres éléments architecturaux du pneumatique, les bandelettes composites permettent de faire varier les caractéristiques de la zone sommet en fonction des besoins, conférant une grande souplesse dans la conception des pneumatiques.

Pour chacun des modes de réalisation préalablement évoqués, différents paramètres peuvent être modifiés tels que la largeur relative des éléments constituants, des largeurs différentes sur des couches différentes, les épaisseurs de composants, le nombre d'alignements de bandelettes qui peut être supérieur à deux, en particulier pour des pneumatiques spécifiques tels que pour véhicules poids lourds, tout terrain ou les avions.

### ELEMENTS CONSTITUTIFS ET MATERIAUX

Le film thermoplastique des bandelettes de renfort 12 est avantageusement réalisée à l'aide de matériaux parmi les suivants: polyester bi-étiré ou mono-étiré stabilisé thermiquement, polyamide (par exemple nylon 6.6). En variante, ces matériaux peuvent être chargés d'inclusions isotropes ou anisotropes ou de forme fibrillaire.

Les bandelettes 12 de film thermoplastique présentent un rapport entre les dimensions longueur/largeur et largeur/épaisseur supérieur ou égal à 5. Le film thermoplastique présente un module dans la direction principale (correspondant à la direction circonférentielle du pneumatique) et dans la direction transverse supérieur à 0,9 GPa et de préférence supérieur à 2GPa.

La matrice 13 ou 15 dans laquelle sont intégrées les bandelettes 12 ou 14 est constituée d'un mélange élastomère de préférence diénique présentant un module à 10% d'allongement classique (typiquement entre 3 et 20MPa), ou préférentiellement rigide (c'est-à-dire supérieur à 20 MPa). Un système adhésif adapté selon la nature des renforts et des mélanges peut être utilisé afin d'obtenir la cohésion nécessaire. Ce système adhésif est par exemple obtenu par une préparation ou activation des surfaces physiquement ou chimiquement puis par l'utilisation d'un adhésif.

Les câbles de renfort 11 sont constitués des matériaux parmi les suivants : aramide, polyester (PET, PEN, PTT), nylon, rayonne, polycétone, fil ou câble métallique, ou composite (verre ou carbone avec résine), ou encore un renfort hybride constitué d'une combinaison des matériaux précédents.

Le tableau 1, ci-dessous, illustre un exemple de résultats obtenus en utilisant des architectures selon les caractéristiques de l'invention. En dimension 175/65R14, une référence avec sommet comportant deux nappes sommet et une couche de fils de nylon orientés à 0° est comparée à une variante dans le cadre de l'invention composée de 2 couches de lames en PET de 15mm de large et 0.5mm d'épaisseur posée en quinquonce. Chaque bandelette est séparée de sa voisine de 1mm. Un mélange diénique de 0.3mm d'épaisseur sépare les deux couches de bandelette PET, cette mise en oeuvre étant également complétée par un fil à 0° PET 440x3 (variante 1) ou Aramide (variante 2).

**Tableau 1 : comparaison de masses, rigidité de dérive et résistance au roulement pour des pneumatiques selon l'invention, en référence à un pneumatique témoin d'architecture classique.**

| | Masse | D(Z) à 0.8ZETRTO et 2.4bar | RRt |
|---|---|---|---|
| Référence | - | 100% | - |
| Variante 1 | -270g / réf | 108% | -0.55kg/T /réf |
| Variante 2 | -450g/réf | 108% | -0.35kg/T /réf |

On observe les gains de masse et de résistance au roulement significatifs obtenus avec les réalisations conformes à l'invention.

### Numéros de référence employés sur les figures

- 1: Pneumatique
- 2: Carcasse
- 3: Flanc
- 4: Sommet
- 5: Bourrelets
- 6: Bande de roulement
- 7: Tringles
- 8: Couche d'étanchéité
- 10: Renfort sommet
- 11: Fil ou câble de renfort
- 12: Bandelette de renfort constituée de film thermoplastique
- 13: Matrice (mélange élastomère de préférence diénique)
- 14: Bandelette de renfort composite (film thermoplastique et fils de renfort)
- 15: Matrice (mélange élastomère de préférence diénique)
- 20: Couche croisée de triangulation
- 21: Couche croisée de triangulation
- 22: Ceinture

## Revendications

1. Pneumatique (1) comprenant une nappe carcasse (2) reliant deux bourrelets (5) par l'intermédiaire de deux flancs (3), ladite nappe carcasse (2) étant surmontée radialement à l'extérieur par une zone de renfort de sommet (10), elle-même radialement à l'intérieur d'une bande de roulement (6), ladite zone de renfort de sommet (10) comprenant une pluralité de bandelettes de renfort (12, 14) disposées sur au moins deux couches, une première couche radialement à l'intérieur et une seconde couche radialement à l'extérieur, lesdites bandelettes (12, 14) desdites première et seconde couches étant disposées de manière juxtaposées selon une direction sensiblement circonférentielle, lesdites bandelettes étant enrobées d'une composition élastomère (13, 15), le recouvrement moyen entre les bandelettes des deux couches étant supérieur à 40%, **caractérisé en ce que** les bandelettes de renfort (12, 14) sont constituées d'un film thermoplastique présentant un module supérieur à 0,9 GPa et de préférence supérieur à 2 GPa dans la direction principale et dans la direction transverse.

2. Pneumatique selon la revendication 1, dans lequel le rapport de forme longueur/largeur et largeur/épaisseur du film thermoplastique (12, 14) est supérieur ou égal à 5.

3. Pneumatique selon l'une des revendications 1 ou 2, dans lequel le film thermoplastique (12, 14) est composé de polyester bi-étiré ou mono-étiré stabilisé thermiquement ou de polyamide.

4. Pneumatique selon l'une des revendications 1 à 3, dans lequel les bandelettes (12, 14) sont intégrées dans une matrice (13, 15) constituée d'un mélange élastomère, de préférence diénique.

5. Pneumatique selon la revendication 4, dans lequel le mélange élastomère de la matrice (13, 15) présente un module à 10% d'allongement compris entre 3 et 20 MPa.

6. Pneumatique selon la revendication 4, dans lequel le mélange élastomère de la matrice (13, 15) présente un module à 10% d'allongement supérieur à 20 MPa.

7. Pneumatique selon l'une des revendications 1 à 6, dans lequel la matrice (13, 15) de mélange élastomère comprend des renforts filaires (11) circonférentiels intégrés dans ladite matrice.

8. Pneumatique selon l'une des revendications 1 à 6, dans lequel les bandelettes (12) comprennent des renforts filaires circonférentiels intégrés dans le film thermoplastique constitutif des bandelettes.

9. Pneumatique selon l'une des revendications 1 à 6, dans lequel les bandelettes (14) sont de type composite, et comprennent un film thermoplastique et un alignement de fils de renfort (11) agencé au voisinage du film thermoplastique, l'ensemble étant intégré dans une matrice (15) de mélange élastomère, de préférence diénique.

10. Pneumatique selon l'une des revendications 4 à 9, dans lequel l'interface entre les bandelettes (12, 14) et le mélange élastomère de matrice (13, 15) prévoit un élément adhésif.

## Patentansprüche

1. Reifen (1), welcher eine Karkassenlage (2) umfasst, die zwei Wülste (5) über zwei Seitenwände (3) verbindet, wobei die Karkassenlage (2) radial außen von einem Scheitelverstärkungsbereich (10) überlagert ist, der sich seinerseits radial innerhalb eines Laufstreifens (6) befindet, wobei der Scheitelverstärkungsbereich (10) eine Vielzahl von Verstärkungsstreifen (12, 14) umfasst, die auf wenigstens zwei Schichten angeordnet sind, einer radial innen befindlichen ersten Schicht und einer radial außen befindlichen zweiten Schicht, wobei die Streifen (12, 14) der ersten und der zweiten Schicht nebeneinander in einer im Wesentlichen der Umfangsrichtung entsprechenden Richtung angeordnet sind, wobei die Streifen in eine Elastomerzusammensetzung (13, 15) eingebettet sind, wobei die mittlere Überdeckung zwischen den Streifen der zwei Schichten größer als 40 % ist, **dadurch gekennzeichnet, dass** die Verstärkungsstreifen (12, 14) aus einem thermoplastischen Film bestehen, der einen Modul aufweist, der größer als 0,9 GPa und vorzugsweise größer als 2 GPa in der Hauptrichtung und in der Querrichtung ist.

2. Reifen nach Anspruch 1, wobei das Formverhältnis Länge/Breite und Breite/Dicke des thermoplastischen Films (12, 14) größer oder gleich 5 ist.

3. Reifen nach einem der Ansprüche 1 oder 2, wobei der thermoplastische Film (12, 14) aus doppelt gezogenem oder einfach gezogenem, thermisch stabilisiertem Polyester oder aus Polyamid besteht.

4. Reifen nach einem der Ansprüche 1 bis 3, wobei die Streifen (12, 14) in eine Matrix (13, 15) integriert sind, die aus einer Elastomermischung, vorzugsweise einer Dienelastomermischung, besteht.

5. Reifen nach Anspruch 4, wobei die Elastomermischung der Matrix (13, 15) einen Modul bei 10 % Dehnung aufweist, der zwischen 3 und 20 MPa liegt.

6. Reifen nach Anspruch 4, wobei die Elastomermischung der Matrix (13, 15) einen Modul bei 10 % Dehnung aufweist, der größer als 20 MPa ist.

7. Reifen nach einem der Ansprüche 1 bis 6, wobei die Matrix (13, 15) aus Elastomermischung in Umfangsrichtung verlaufende drahtförmige Verstärkungselemente (11) umfasst, die in die Matrix integriert sind.

8. Reifen nach einem der Ansprüche 1 bis 6, wobei die Streifen (12) in Umfangsrichtung verlaufende drahtförmige Verstärkungselemente umfassen, die in den thermoplastischen Film integriert sind, aus dem die Streifen bestehen.

9. Reifen nach einem der Ansprüche 1 bis 6, wobei die Streifen (14) vom Verbundtyp sind und einen thermoplastischen Film und eine Aneinanderreihung von Verstärkungsdrähten (11), die in der Nähe des thermoplastischen Films angeordnet ist, umfassen, wobei das Ganze in eine Matrix (15) aus Elastomermischung, vorzugsweise Dienelastomermischung, integriert ist.

10. Reifen nach einem der Ansprüche 4 bis 9, wobei die Grenzfläche zwischen den Streifen (12, 14) und der Elastomermischung der Matrix (13, 15) ein Klebeelement vorsieht.

## Claims

1. Tyre (1) comprising a carcass ply (2) that connects two beads (5) by way of two sidewalls (3), said carcass ply (2) being surmounted radially on the outside by a crown reinforcing zone (10), itself radially on the inside of a tread (6), said crown reinforcing zone (10) comprising a plurality of reinforcing strips (12, 14) disposed in at least two layers, a first layer radially on the inside and a second layer radially on the outside, said strips (12, 14) of said first and second layers being disposed in a juxtaposed manner in a substantially circumferential direction, said strips being coated in an elastomeric composition (13, 15), the mean overlap between the strips of the two layers being greater than 40%, **characterized in that** the reinforcing strips (12, 14) are made of a thermoplastic film having a modulus greater than 0.9 GPa and preferably greater than 2 GPa in the main direction and in the transverse direction.

2. Tyre according to Claim 1, wherein the length/width and width/thickness aspect ratio of the thermoplastic film (12, 14) is greater than or equal to 5.

3. Tyre according to either of Claims 1 and 2, wherein the thermoplastic film (12, 14) is made of thermally stabilized biaxially or monoaxially drawn polyester or of polyamide.

4. Tyre according to one of Claims 1 to 3, wherein the strips (12, 14) are integrated in a matrix (13, 15) made of an elastomeric mixture, preferably a diene elastomeric mixture.

5. Tyre according to Claim 4, wherein the elastomeric mixture of the matrix (13, 15) has a modulus at 10% elongation of between 3 and 20 MPa.

6. Tyre according to Claim 4, wherein the elastomeric mixture of the matrix (13, 15) has a modulus at 10% elongation of greater than 20 MPa.

7. Tyre according to one of Claims 1 to 6, wherein the matrix (13, 15) of elastomeric mixture comprises circumferential filamentary reinforcing elements (11) integrated in said matrix.

8. Tyre according to one of Claims 1 to 6, wherein the strips (12) comprise circumferential filamentary reinforcing elements integrated in the thermoplastic film of which the strips are made.

9. Tyre according to one of Claims 1 to 6, wherein the strips (14) are of the composite type and comprise a thermoplastic film and an alignment of reinforcing threads (11) arranged in the vicinity of the thermoplastic film, the whole being integrated in a matrix (15) of elastomeric mixture, preferably diene elastomeric mixture.

10. Tyre according to one of Claims 4 to 9, wherein the interface between the strips (12, 14) and the matrix elastomeric mixture (13, 15) provides an adhesive element.
